# FASCICULE DE BREVET EUROPEEN

(11) **EP 1 341 728 B1**
(45) Date de publication et mention de la délivrance du brevet: **23.11.2005**
(21) Numéro de dépôt: 01987733.1
(22) Date de dépôt: 16.10.2001
(51) Int. Cl.: C02F 11/18, C02F 11/00

(54) **PROCEDE D'INERTAGE DE BOUES**
VERFAHREN ZUR INERTISIERUNG VON SCHLÄMMEN
SLUDGE INERTING METHOD

(30) Priorité: 17.10.2000 FR 0013417
(43) Date de publication de la demande: 10.09.2003
(73) Titulaire: SOLVAY (Société Anonyme), 1050 Bruxelles (BE)
(72) Inventeur: DEPELSENAIRE, Guy, B-1490 Court-Saint-Etienne (BE); DERIE, René, B-1170 Bruxelles (BE)
(74) Mandataire: Jacques, Philippe
(86) Numéro de dépôt international: PCT/EP2001/011928
(87) Numéro de publication internationale: WO 2002/032817

(56) Documents cités:
- WO-A-97/31874
- US-A- 3 947 283
- US-A- 5 037 286

## Description

La présente invention concerne un procédé d'inertage de boues, en particulier de sédiments de curage.

Les problèmes posés par les quantités sans cesse grandissantes des boues à évacuer, traiter et stocker sont bien connus. Ces boues sont d'origines multiples. Elles proviennent par exemple de stations d'épuration d'eau, du dragage ou curage des cours d'eau ou d'industries diverses. Le cas des sédiments de curage des voies navigables est particulièrement préoccupant vu les quantités concernées et leur contamination par des polluants tels que des métaux lourds et des matières organiques. Une proportion importante des voies navigables du nord de l'Europe est actuellement obstruée par des boues qui y gênent la circulation des bateaux. Les conséquences économiques et environnementales, directes ou indirectes en sont très importantes. Il est d'autre part notoire que cette situation préoccupante du réseau navigable est principalement due aux inconvénients des solutions actuelles pour le traitement et le stockage de boues contaminées.

En effet, un moyen commode d'évacuer les boues consiste à les rejeter par bateau en mer ou à les acheminer au moyen de pipelines dans des décharges de décantation. Toutefois, lorsque les boues sont contaminées par des métaux lourds ou des matières organiques dangereuses (ce qui est généralement le cas avec les sédiments provenant du curage des voies navigables), ce moyen est évidemment inacceptable. Avant de pouvoir être déchargées, les boues doivent en effet être inertées, afin de satisfaire aux tests de non toxicité. A cet effet, les résidus du traitement d'inertage sont soumis à une lixiviation, par exemple selon les normes française « TL » ou néerlandaise « NEN », définies ci-dessous. Les lixiviats sont alors analysés et leur teneur en divers polluants doit rester en deçà de seuils fixés par les législations. Il existe notamment des normes d'acceptation de « déchets stabilisés de classe 1 ».

Pour traiter de grandes quantités de boues, dans le but de pouvoir les évacuer, il est connu de les calciner et de les mélanger ensuite avec un liant hydraulique (GRAY et PENESSIS, « Engineering properties of sludge ash », Journal WPCF, vol 44, N° 5 mai 1976, p 847-858). Un tel traitement réduit le volume des boues et permet grâce à la solidification obtenue de les valoriser dans diverses applications. Cependant, lorsque les boues sont contaminées par des métaux lourds et en particulier par du plomb, ce traitement connu ne permet pas de les inerter suffisamment pour qu'elles deviennent inoffensives.

L'invention vise à remédier aux inconvénients précités en fournissant un procédé pour le traitement de boues contaminées par des métaux lourds et des matières organiques qui soit simple et économique et transforme les boues en blocs compacts présentant de bonnes propriétés mécaniques et satisfaisant les tests de toxicité normalisés.

En conséquence, l'invention concerne un procédé d'inertage de boue contenant des métaux lourds et des matières organiques dans lequel la boue est soumise à une calcination, gâchée avec de l'eau et et le mélange résultant est soumis à une prise et un durcissement, le procédé se caractérisant en ce que l'on additionne de l'acide phosphorique à la boue avant l'étape de calcination.

On entend désigner par boue, une substance aqueuse contenant des limons, des vases et des matières minérales en suspension (sables voire gravillons). Les sédiments provenant du curage des voies navigables constituent un exemple de boues auxquelles l'invention s'applique. La largeur de la distribution granulométrique des particules en suspension dans la boue peut être très importante, par exemple de moins de 1 micron à plusieurs centaines de microns. Les boues contiennent souvent une teneur élevée en très fines particules. Il est fréquent que 10% du poids de la boue séchée soit constitué de particules ayant un diamètre inférieur à 5 microns, tandis que le contenu en petits graviers ayant un diamètre supérieur à 500 microns peut atteindre plusieurs pour-cent. D'autre part, les histogrammes de granulométrie de certaines boues ont la particularité d'être multimodaux, c'est à dire qu'ils présentent plusieurs maximums.

Les boues peuvent être inertées telles quelles. Elles peuvent aussi subir un prétraitement au cours duquel les plus grosses particules sont éliminées.

Les boues que l'on désire inerter peuvent comprendre une quantité variable d'eau selon leur origine. Il est usuel que les boues à inerter contiennent une quantité pondérale d'eau supérieure à 20%. Habituellement cette quantité est comprise entre 30 et 60%. Généralement elle est inférieure à 70%.

Pour le procédé selon l'invention, les boues qui contiennent des quantités pondérales d'eau supérieures à 30% conviennent bien. Des quantités supérieures à 70% ou dans certains cas 60%, sont cependant à éviter car elles augmentent le coût du procédé. La majorité des boues à traiter ayant une teneur pondérale en eau variant entre 30 et 60%, il n'est en général nécessaire ni d'ajouter de l'eau ni d'en soustraire (par décantation, évaporation,...).

On entend désigner par métaux lourds, les métaux dont la masse spécifique est au moins égale à 5g/cm3, ainsi que le béryllium, l'arsenic, le sélénium, et l'antimoine, conformément à la définition généralement admise (Heavy Metals in Wastewater and Sludge Treatment Processes ;Vol I, CRC Press Inc; 1987; page 2). Le plomb en est un exemple particulièrement significatif, étant donnée son influence néfaste sur l'organisme humain. Les boues inertées par le procédé selon l'invention peuvent également contenir de l'aluminium métallique.

Les matières organiques peuvent être à l'état liquide ou à l'état solide dans la boue. Elles peuvent par exemple comprendre des hydrocarbures apolaires, des hydrocarbures aliphatiques ou aromatiques (mono- ou polycycliques) et des solvants halogénés.

Selon l'invention, on additionne à la boue de l'acide phosphorique. La quantité d'acide phosphorique à mettre en oeuvre dépend de la composition précise de la boue à traiter. Sans vouloir être tenu par une explication théorique, l'inventeur pense que, suite à l'addition d'acide phosphorique, du pyrophosphate de calcium se forme lors de la calcination. Ce pyrophosphate s'est révélé être un piège à métaux lourds. Dès lors, la quantité précise d'acide phosphorique à mettre en oeuvre dépend de la teneur de la boue en ces métaux lourds. En pratique, une quantité pondérale d'au moins 1% (de préférence 2%) par rapport au poids de matière sèche est à mettre en oeuvre. Il est préférable que la quantité d'acide phosphorique soit inférieure à 15%. Des quantités comprises entre 2 et 6% conviennent en général bien.

La calcination est destinée à détruire les matières organiques. La calcination est généralement réalisée à une température supérieure à 450°C, afin que les matières organiques soient suffisamment détruites. Il convient d'éviter une température excessive, qui aurait pour résultat de vaporiser une partie des métaux lourds. En pratique, la température de calcination est inférieure à 1000°C. Dans une variante préférée du procédé selon l'invention, la température de calcination est supérieure à 500°C et inférieure à 800°C. Afin de particulièrement bien détruire les matières organiques et volatiliser le moins possible de métaux lourds, il est spécialement avantageux que la température de calcination soit supérieure à 550°C et inférieure à 750°C.

On a observé que de manière avantageuse, la calcination est effectuée sous atmosphère contrôlée.

A cet effet, dans une forme de réalisation particulière du procédé selon l'invention, cette atmosphère est oxydante. Cette variante facilite la prise du mortier. Dans ce cas, on peut utiliser par exemple de l'air ambiant. Il faut alors veiller à ce que de l'air soit disponible en suffisance dans le four.

Dans une autre forme de réalisation particulière, l'atmosphère est réductrice. Cette forme de réalisation est notamment avantageuse en ce qu'elle inhibe la formation du chrome VI.

La durée de la calcination dépend de la composition de la boue à inerter et de la disposition de la matière dans le four de calcination. Elle doit également être suffisante pour détruire les matières organiques et produire assez de pyrophosphate.

Lors de l'étape de calcination, on a observé que certaines boues, en particulier celles qui sont riches en calcite, donnent lieu à la formation de matériaux pouzzolaniques. Ce phénomène est plus prononcé lorsque la température de calcination dépasse 750 °C. Dans ce cas il n'est pas nécessaire d'ajouter un liant hydraulique pour provoquer la prise et le durcissement.

Dans une forme de réalisation particulière de l'invention, un liant hydraulique est mélangé au produit de la calcination.

Le liant hydraulique est comnnunément constitué de ciment Portland. Toutefois, l'utilisation de ciment de haut fourneau (contenant du laitier métallurgique) favorise la réduction du chrome VI. Des matériaux pouzzolaniques tels des cendres de combustion de charbon peuvent également convenir. Il faut ajouter, lors du mélange du liant hydraulique avec le produit de la calcination destiné à former le mortier, une quantité d'eau de gâchage suffisante pour obtenir une pâte plastique. La quantité de liant hydraulique à mettre en oeuvre dépend de divers paramètres, en particulier du liant hydraulique sélectionné, de la composition des boues et des propriétés recherchées pour le produit final du procédé de traitement selon l'invention, notamment sa résistance mécanique. En pratique, on recommande souvent de mettre en oeuvre une quantité pondérale de liant supérieure à 1 % du poids des cendres de calcination. Selon l'invention, il est souhaitable que le poids du liant hydraulique soit inférieur à 50% et n'excède pas de préférence 30%.

Dans une variante avantageuse, on met en oeuvre une quantité pondérale de liant hydraulique supérieure à 2% et inférieure à 20% du produit de la calcination.

La forme de la masse solide obtenue à l'issue du durcissement, qui peut durer plusieurs jours, est celle sous laquelle le mortier a été façonné. Elle peut comprendre par exemple des briquettes ou des blocs sphériques ou prismatiques. Elle est compacte, sensiblement exempte d'inclusions gazeuses et présente de ce fait de bonnes propriétés mécaniques, notamment une dureté et une résistance aux chocs suffisantes pour permettre sa manutention et son stockage sans difficultés.

La masse solide et compacte est sensiblement inerte vis-à-vis des agents atmosphériques et respecte les normes de toxicité sur les lixiviats extraits selon des procédures sévères telles que celles définies par les normes « TL » ou « NEN ».

Le test français de triple lixiviation « TL » est décrit dans la norme française XPX 31 - 210. Le protocole du test consiste à broyer la matière de manière à pouvoir la passer au travers d'un tamis de 4mm. Cette matière broyée est soumise à une triple lixiviation avec de l'eau déminéralisée, dans un rapport liquide/solide égal à 10, sous agitation constante. A l'issue de chaque lixiviation on mesure la teneur du liquide de lavage en les métaux lourds de la poudre soumise au test.

Le test néerlandais « NEN » consiste, quant à lui, à broyer finement l'échantillon (sous 125µm) et lui ajouter de l'eau dans un rapport eau :solide de 50. Il est alors maintenu trois heures à pH 7, puis également trois heures à pH 4 (ce qui est le pH minimum de l'eau de pluie). L'ajustement du pH se fait en continu à l'aide d'une solution 1N d'acide nitrique (acide non complexant). Le contenu de la phase liquide en métaux lourds est alors déterminé par analyse.

De manière spécialement avantageuse, la prise et le durcissement du mortier sont exécutés à son endroit de stockage final. Cet endroit sera par exemple avantageusement une carrière désaffectée, un lac ou toute cavité que l'on désire combler. Si la cavité est initialement remplie d'eau, il ne sera pas nécessaire d'extraire celle-ci totalement, la prise et le durcissement du mortier n'étant en aucune manière gênés par la présence d'eau. Les carrières désaffectées conviennent particulièrement bien au stockage des boues inertées par le procédé selon l'invention.

Selon une forme de réalisation particulièrement avantageuse du procédé selon l'invention, on incorpore à l'eau de gâchage un additif réducteur. A titre d'exemple, cet additif peut être sélectionné parmi : le fer, le manganèse, les composés du fer (II), les composés du manganèse (II), les sels réducteurs des métaux alcalins. Dans cette forme de réalisation du procédé, l'agent réducteur est additionné en une quantité pondérale comprise entre 0,1 et 1 % du poids de matières sèches contenues dans la boue.

Dans une variante préférée de cette forme de réalisation, l'additif réducteur est du sulfite de sodium.
Pour l'application du procédé selon l'invention, l'origine des boues n'est pas critique. Le procédé peut par exemple s'appliquer :
- Aux boues issues de la décantation d'eaux usées d'origine industrielle ou urbaine,
- Aux sédiments provenant du dragage ou curage de rivières, d'étangs, de puits ou d'égouts,
- Aux sédiments provenant du curage de voies navigables (p.ex. ports, lacs, fleuves, canaux).

L'invention est toutefois spécialement adaptée aux boues constituées de sédiments provenant du curage de voies navigables.

L'invention est illustrée par la description suivante en référence aux dessins annexés.

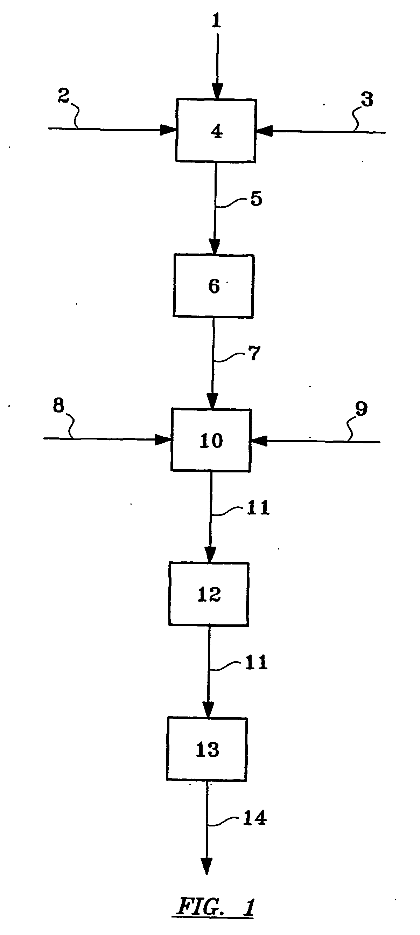

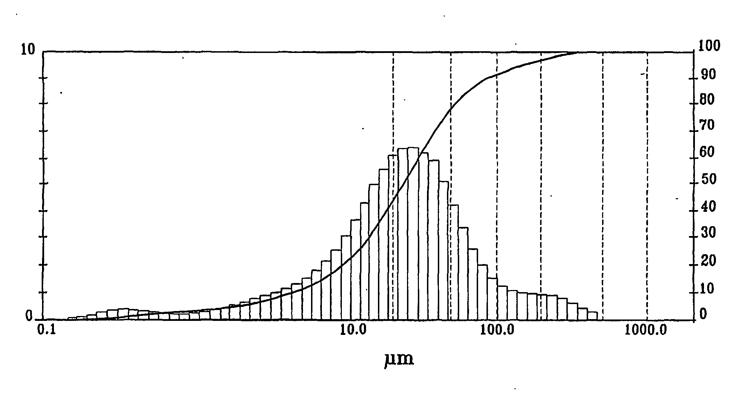

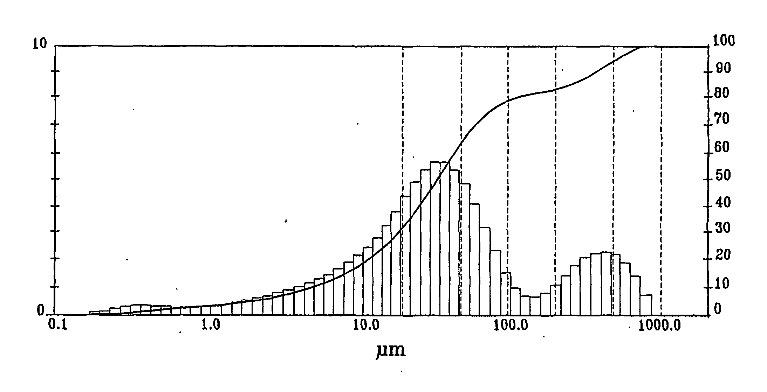

La figure 1 représente le schéma d'une installation mettant en oeuvre une forme de réalisation particulière du procédé selon l'invention ; la figure 2 est un histogramme de la distribution granulométrique d'une boue soumise au procédé selon l'invention ; la figure 3 est analogue à la figure 2, dans le cas d'une autre boue.

L'installation schématisée à la figure est destinée au traitement de sédiments de curage 1, comprenant des métaux lourds et des matières organiques. Elle comprend une chambre de réaction 4 dans laquelle le sédiment de curage 1 est additionnée d'une quantité suffisante d'acide phosphorique 2 et éventuellement, si nécessaire, d'eau 3, pour former par malaxage une masse pompable 5. On soutire la masse pompable 5 de la chambre de réaction 4 et on l'introduit dans un four de calcination 6 où on la chauffe à une température voisine de 650°C en présence d'air, pendant un temps suffisant pour décomposer les matières organiques. La matière calcinée 7 extraite du four 6 est transférée à une chambre de malaxage 10, où on lui additionne de l'eau 8 et un liant hydraulique 9 en quantités réglées pour former par malaxage avec la matière calcinée 7 un mortier hydraulique 11. Le mortier 11 est pompé de la chambre de malaxage 10 et acheminé via des conduites 12 vers une carrière désaffectée 13 où il est déversé. Le mortier 11 est alors soumis à une prise et durcissement à l'endroit même de son stockage pour former un déchet stabilisé 14.

Les exemples dont la description suit vont faire apparaître l'intérêt de l'invention.

### Première série d'essais

Dans les exemples 1 à 4, dont la description suit, on a traité des boues prélevées dans un canal. La composition pondérale de la boue est reprise au tableau 1 suivant. La distribution granulométrique de la boue est illustrée à la figure 2, dans laquelle l'échelle des abscisses représente le diamètre des particules, l'échelle des ordonnées de gauche représente la répartition granulométrique en unités relatives et l'échelle des ordonnées de droite représente les fractions cumulées de la répartition, en % en poids de matières sèches.

**Tableau 1**

| Constituants | Teneur pondérale (en poids de matière sèche) |
|---|---|
| Cd | 14 mg/kg |
| Co | 19 mg/kg |
| Cr | 200 mg/kg |
| Cu | 170mg/kg |
| Ni | 190 mg/kg |
| Pb | 950 mg/kg |
| Matières organiques | 157 g/kg |
| CaCO₃ | 118 g/kg |
| Eau | 1 kg/kg |

### Exemple 1 (non conforme à l'invention)

Des portions de boues correspondant à 1kg de matières sèches (soit 2 kg de boue brute) ont été placées dans des récipients en terre cuite et calcinés pendant 1 heure à une température de 600°C (départ four froid, montée à 600°C en 1h). Le produit de calcination a ensuite été additionné de 10% de ciment Portland ordinaire, soit 12 g de ciment pour 108 g de boue calcinée. Ces échantillons de 120g ont alors été gâchés avec une quantité suffisante d'eau pour obtenir une pâte plastique, soit 55 ml environ et ont été coulés dans des tubes à centrifuger en polypropylène de 37 mm de diamètre. Après 28 jours, les carottes solidifiées ont été démoulées et des éprouvettes de compression d'une hauteur de 40 mm environ en ont été débitées à la scie diamantée. Après dressage des faces et séchage à température ordinaire durant deux jours, la masse volumique des échantillons a été mesurée. Les échantillons ont enfin été soumis au test de lixiviation « TL » défini ci dessus. Les résultats de la mesure de masse volumique et du test de lixiviation sont repris dans le tableau 2 :

**Tableau 2**

| Masse volumique (kg/dm3) | Triple lixiviation « TL » | | | | | |
|---|---|---|---|---|---|---|
| | 1ère | | 2ème | | 3ème | |
| | pH | Cr(VI) (mg/l) | pH | Cr(VI) (mg/l) | pH | Cr(VI) (mg/l) |
| 1,30 | 11,6 | 0,26 | 11,5 | 0,07 | 11,4 | 0,006 |

### Exemple 2 (conforme à l'invention)

Dans l'exemple 2 on a procédé comme dans l'exemple 1 excepté que, conformément à l'invention, la matière sèche a été additionnée de 29,5 g d'acide phosphorique à 85% en poids, pour 1 kg de matière sèche, l'homogénéisation étant assurée par un malaxeur à mortier à main. Les résultats des tests mécaniques et de lixiviation sont repris au tableau 3 :

**Tableau 3**

| Masse volumique (kg/dm3) | Triple lixiviation « TL» | | | | | |
|---|---|---|---|---|---|---|
| | 1ère | | 2ème | | 3ème | |
| | pH | Cr(VI) (mg/l) | pH | Cr(VI) (mg/l) | pH | Cr(VI) (mg/l) |
| 1,24 | 11,6 | 0,028 | 11,5 | 0,002 | 11,4 | N.D. |

On constate la nette diminution de la contamination par le Cr VI. A la troisième lixiviation les quantités sont non détectables. Les contaminations au plomb sont indétectables par ce test (< 50 µg/l).

### Exemple 3 (non conforme à l'invention)

On a procédé comme dans l'exemple 1, mais en remplaçant le test «TL» par le test NEN ». Ce test, plus sévère, permet de mettre en évidence les contaminations au plomb. Les résultats sont repris au tableau 4 :

**Tableau 4**

| Cd(mg/l) | Cr(mg/l) | Ni(mg/l) | Pb(mg/l) | HNO3 1N ajoutés (ml) |
|---|---|---|---|---|
| 0,07 | 0,15 | 0,05 | 0,48 | 19,1 |

### Exemple 4 (conforme à l'invention)

On a procédé comme dans l'exemple 2, mais en remplaçant le test « TL » par le test « NEN ».

**Tableau 5**

| Cd(mg/l) | Cr(mg/l) | Ni(mg/l) | Pb(mg/l) | HNO3 1N ajoutés (ml) |
|---|---|---|---|---|
| 0,05 | 0,13 | 0,06 | 0,13 | 18,3 |

Les résultats consignés au tableau 5 montrent la très nette diminution de la contamination au plomb grâce au traitement conforme à l'invention.

### Deuxième série d'essais

Dans les exemples 5 et 6, dont la description suit, on a traité des boues prélevées dans un autre canal. La composition pondérale de la boue est reprise au tableau 6 suivant. La distribution granulométrique de la boue est illustrée à la figure 3, dans laquelle l'échelle des abscisses représente le diamètre des particules, l'échelle des ordonnées de gauche représente la répartition granulométrique en unités relatives et l'échelle des ordonnées de droite représente les fractions cumulées de la répartition, en % en poids de matières sèches.

**Tableau 6**

| Constituants | Teneur pondérale (poids de matière sèche) |
|---|---|
| Cd | 14 mg/kg |
| Co | 10 mg/kg |
| Cr | 270 mg/kg |
| Cu | 200 mg/kg |
| Ni | 150 mg/kg |
| Pb | 520 mg/kg |
| Matières organiques | 160 g/kg |
| Eau | 1700 g/kg |
| CaCO₃ | 149 g/kg |

### Exemple 5 (non conforme à l'invention)

Dans cet exemple on a opéré, au départ des boues dont la composition est donnée en tableau 6, selon la même procédure que dans l'exemple 1 mais en augmentant la quantité de liant hydraulique utilisé : 18 g de ciment Portland pour 102 g de boue calcinée (soit 15%).

**Tableau 7**

| Masse volumique (kg/dm3) | Triple lixiviation « TL » | | | | | |
|---|---|---|---|---|---|---|
| | 1ère | | 2ème | | 3ème | |
| | pH | Cr(VI) (mg/l) | pH | Cr(VI) (mg/l) | pH | Cr(VI) (mg/l) |
| 1,28 | 11,4 | 0,27 | 11,3 | 0,039 | 11,3 | N. D. |

### Exemple 6 (conforme à l'invention)

L'exemple 6 reprend les conditions de l'exemple 2, mais en augmentant également la quantité de liant hydraulique utilisé : 18 g de ciment Portland pour 102 g de boue calcinée (soit 15%).

**Tableau 8**

| Masse volumique (kg/dm3) | Triple lixiviation « TL » | | | | | |
|---|---|---|---|---|---|---|
| | 1ère | | 2ème | | 3ème | |
| | pH | Cr(VI) (mg/l) | pH | Cr(VI) (mg/l) | pH | Cr(VI) (mg/l) |
| 1,26 | 11,4 | 0,15 | 11,4 | 0,02 | 11,3 | N. D. |

On constate encore la nette diminution de la contamination par le Cr VI, apportée par le traitement selon l'invention.

### Exemple 7 (conforme à l'invention)

Dans cet exemple on a repris les conditions de l'exemple 6 mais en ajoutant, lors du mélange de la poudre calcinée avec le liant hydraulique, 0,25% (en poids de matières sèches de la boue) de sulfite de sodium (agent réducteur).

**Tableau 9**

| Masse volumique (kg/dm3) | Cr VI à la première lixiviation (mg/l) |
|---|---|
| 1,28 | Non détectable |

On constate que suite à l'ajout de l'agent réducteur (sulfite de sodium), le Cr VI n'est plus détectable. Ceci confirme que l'inertage du Cr VI a été renforcé.

### Troisième série d'essais

Dans cette série d'essais on a traité des boues prélevées dans un port. Ces boues comprennent de l'eau de mer. Leur composition en métaux lourds et/ou toxiques est reprise au tableau 10.

**Tableau 10**

| Constituants | Teneur pondérale (poids de matière sèche) |
|---|---|
| Cd | 10 mg/kg |
| Cr | 26 mg/kg |
| Cu | 39 mg/kg |
| Ni | 7,9 mg/kg |
| Pb | 158 mg/kg |
| Zn | 2470 mg/kg |
| CaCO₃ | 300g/kg |
| Matières organiques | 130g/kg |
| Eau | 2100g/kg |

### Exemple 8 (conforme à l'invention)

Dans cet exemple on a opéré, mais au départ de boues ayant la composition précisée au tableau 10, comme dans l'exemple 2, sauf que la calcination a été effectuée pendant deux heures à 625°C et qu'on a utilisé du ciment de haut fourneau (contenant du laitier métallurgique), de manière à réduire le Cr (VI). Les résultats des tests mécaniques et de lixiviation sont repris au tableau 11:

**Tableau 11**

| Masse volumique (kg/dm3) | Triple lixiviation « TL » | | | | | |
|---|---|---|---|---|---|---|
| | 1ère | | 2ème | | 3ème | |
| | pH | Cr(VI) (mg/l) | pH | CR(VI) (mg/l) | pH | Cr(VI) (mg/l) |
| 1,25 | 12 | < 0,002 | 12 | <0,002 | 11,9 | <0,002 |

(Cd < 0,005 mg/l; Cu < 0,02 mg/l; Zn < 0,05 mg/l; Pb < 0,04 mg/l)

### Exemple 9 (conforme à l'invention)

Dans cet exemple on a opéré comme dans l'exemple 8 sauf que le test de lixiviation a été effectué à l'eau de mer, dont la composition est donnée au tableau 12.

**Tableau 12**

| Constituant | Teneur pondérale (mg/l) |
|---|---|
| Na | 10560 |
| K | 380 |
| Ca | 380 |
| Mg | 1270 |
| Cl | 18980 |
| SO₄ | 2650 |

Les résultats des tests mécaniques et de lixiviation sont repris au tableau 13 :

**Tableau 13**

| Masse volumique (kg/dm3) | Triple lixiviation « TL » | | | | | |
|---|---|---|---|---|---|---|
| | 1 ère | | 2ème | | 3ème | |
| | pH | Cr(VI) (mg/l) | pH | CR(VI) (mg/l) | pH | Cr(VI) (mg/l) |
| 1,25 | 10,8 | < 0,002 | 10 | <0,002 | 8,9 | <0,002 |

(Cd < 0,005 mg/l; Cu < 0,02 mg/l; Zn < 0,05 mg/l; Pb < 0,04 mg/l)

On constate que la présence d'eau de mer ne nuit en aucune manière à l'efficacité du procédé selon l'invention.

### Quatrième série d'essais

Dans cette série d'essais on a opéré au départ de boues issues d'un lac, ces boues ayant subi un pré-traitement au cours duquel successivement :
- les particules de la boue ayant un diamètre supérieur à 60µ sont éliminées ;
- les matériaux subsistants sont soumis à une floculation destinée à faciliter la séparation solide - liquide ;
- la boue résultante est soumise à un pressage sur filtre à bande jusqu'à l'obtention d'une teneur en matières sèches de 40% au moins.

La composition des boues est reprise au tableau 14

**Tableau 14**

| Constituants | Teneur pondérale (poids de matière sèche) |
|---|---|
| Cd | 2 mg/kg |
| Co | < 3 mg/kg |
| Cr | 24 mg/kg |
| Cu | 59 mg/kg |
| Ni | 11 mg/kg |
| Pb | 395 mg/kg |
| Zn | 590 mg/kg |
| Matières organiques | 100 g/kg |
| CaCO₃ | 570 g/kg |
| Eau | 1500 g/kg |

### Exemple 10 (conforme à l'invention)

Dans cet exemple on a opéré, au départ de boue prélevée dans un lac, comme dans l'exemple 8.

Les résultats des tests mécaniques et de lixiviation sont repris au tableau 15 :

**Tableau 15**

| Masse volumique (kg/dm3) | Triple lixiviation « TL » | | | | | |
|---|---|---|---|---|---|---|
| | 1ère | | 2ème | | 3ème | |
| | pH | Cr(VI) (mg/l) | pH | CR(VI) (mg/l) | pH | Cr(VI) (mg/l) |
| 1,05 | 11,2 | < 0,002 | 11,2 | <0,002 | 11,2 | <0,002 |

(Cd < 0,005 mg/l; Cu < 0,02 mg/l; Ni < 0,05 mg/l; Zn < 0,09 mg/l)

### Exemple 11 (conforme à l'invention)

Dans cet exemple, on a opéré comme dans l'exemple 2 sauf que la calcination a été effectuée pendant 2 heures à 775°C et qu'aucun liant hydraulique n'a été ajouté.

Les résultats du test de lixiviation sont donnés au tableau 16 et montrent l'excellent inertage des substances toxiques :

**Tableau 16**

| Masse volumique (kg/dm3) | Triple lixiviation « TL » | | | | | | | | |
|---|---|---|---|---|---|---|---|---|---|
| | 1ère | | | 2ème | | | 3ème | | |
| | pH | Cr(VI) (mg/l) | Pb (mg/l) | pH | Cr(VI) (mg/l) | Pb (mg/l) | pH | Cr(VI) (mg/l) | Pb (mg/l) |
| 1,14 | 12,7 | 0,087 | 0,1 | 12,8 | 0,023 | 0,1 | 12,8 | 0,015 | 0,09 |

(Cd <0,005 mg/l; Cu < 0,02 mg/l; Ni < 0,05 mg/l; Zn < 0,09 mg/l)

D'autre part, ces échantillons se sont révélés posséder une résistance élevée à la compression de 13 N/mm², malgré l'absence de liant hydraulique.

Cet exemple illustre la formation de composés pouzzolaniques lors de la calcination à plus haute température de boues ayant un contenu élevé en calcite.

## Revendications

1. Procédé d'inertage de boue (1) contenant des limons, des vases et des sables en suspension, la dite boue contenant des métaux lourds et des matières organiques selon lequel la boue est soumise à une calcination (6), gâchée avec de l'eau (8) et le mélange résultant (11) est soumis à une prise et un durcissement, **caractérisé en ce que** l'on additionne de l'acide phosphorique (2) à la boue avant l'étape de calcination.

2. Procédé selon la revendication 1, **caractérisé en ce que** un liant hydraulique (9) est mélangé au produit de la calcination (7).

3. Procédé selon la revendication 2, **caractérisé en ce que** la température de calcination est supérieure à 500°C et inférieure à 800°C.

4. Procédé selon la revendication précédente, **caractérisé en ce que** la température de calcination est supérieure à 550°C et inférieure à 750°C

5. Procédé selon l'une quelconque des revendications précédentes, **caractérisé en ce que** la calcination est effectuée sous atmosphère contrôlée non oxydante.

6. Procédé selon l'une quelconque des revendications 2 à 5, **caractérisé en ce que** on met en oeuvre une quantité pondérale de liant hydraulique supérieure à 2% et inférieure à 20% du produit de la calcination.

7. Procédé selon l'une quelconque des revendications précédentes, **caractérisé en ce que** la prise et le durcissement du mélange sont exécutés à son endroit de stockage final.

8. Procédé selon la revendication précédente, **caractérisé en ce que** l'endroit de stockage final est une carrière désaffectée.

9. Procédé selon l'une quelconque des revendications précédentes, **caractérisé en ce que** l'on incorpore à l'eau de gâchage un additif réducteur.

10. Procédé selon la revendication précédente, **caractérisé en ce que** l'additif réducteur est du sulfite de sodium.

11. Procédé selon l'une quelconque des revendications précédentes, **caractérisé en ce que** la boue est constituée de sédiments provenant du curage de voies navigables.

## Patentansprüche

1. Verfahren zum Inertisieren von Schlamm (1), der Lehm, Schlick und Sand in Suspension enthält, wobei dieser Schlamm Schwermetalle und organische Materialien enthält, wonach der Schlamm einem Kalzinieren (6) unterworfen wird, mit Wasser (8) angemacht wird und das resultierende Gemisch (11) einem Abbinden und einem Aushärten unterworfen wird, **dadurch gekennzeichnet, daß** dem Schlamm vor dem Kalzinierungsschritt Phosphorsäure (2) zugesetzt wird.

2. Verfahren nach Anspruch 1, **dadurch gekennzeichnet, daß** dem Kalzinierungsprodukt (7) ein hydraulisches Bindemittel (9) zugemischt wird.

3. Verfahren nach Anspruch 2, **dadurch gekennzeichnet, daß** die Kalzinierungstemperatur über 500°C und unter 800°C liegt.

4. Verfahren nach dem vorstehenden Anspruch, **dadurch gekennzeichnet, daß** die Kalzinierungstemperatur über 550°C und unter 750°C liegt.

5. Verfahren nach einem der vorstehenden Ansprüche, **dadurch gekennzeichnet, daß** das Kalzinieren unter einer nicht oxydierenden geregelten Atmosphäre vorgenommen wird.

6. Verfahren nach einem der Ansprüche 2 bis 5, **dadurch gekennzeichnet, daß** eine Gewichtsmenge des hydraulischen Bindemittels von über 2 % und unter 20 % des Kalzinierungsproduktes eingesetzt wird.

7. Verfahren nach einem der vorstehenden Ansprüche, **dadurch gekennzeichnet, daß** das Abbinden und das Erhärten des Gemisches an seinem Endlagerplatz vorgenommen werden.

8. Verfahren nach dem vorstehenden Anspruch, **dadurch gekennzeichnet, daß** der Endlagerplatz ein stillgelegter Steinbruch ist.

9. Verfahren nach einem der vorstehenden Ansprüche, **dadurch gekennzeichnet, daß** in das Anmachwasser ein reduzierendes Additiv eingebracht wird.

10. Verfahren nach dem vorstehenden Anspruch, **dadurch gekennzeichnet, daß** das reduzierende Additiv Natriumsulfit ist.

11. Verfahren nach einem der vorstehenden Ansprüche, **dadurch gekennzeichnet, daß** der Schlamm aus Sedimenten besteht, die aus dem Ausbaggern von Schiffahrtswegen stammen.

## Claims

1. Process for rendering inert sludge (1) comprising silt, mud and sands in suspension, said sludge containing heavy metals and organic matter, according to which the sludge is subjected to a calcination (6) and mixed with water (8), and the resulting mixture (11) is subjected to setting and curing, **characterized in that** phosphoric acid (2) is added to the sludge before the calcination stage.

2. Process according to Claim 1, **characterized in that** a hydraulic binder (9) is mixed with the product of the calcination (7).

3. Process according to Claim 2, **characterized in that** the calcination temperature is greater than 500°C and less than 800°C.

4. Process according to the preceding claim, **characterized in that** the calcination temperature is greater than 550°C and less than 750°C.

5. Process according to any one of the preceding claims, **characterized in that** the calcination is carried out under a controlled nonoxidizing atmosphere.

6. Process according to any one of Claims 2 to 5, **characterized in that** use is made of an amount by weight of hydraulic binder of greater than 2 % and less than 20 % of the product of the calcination.

7. Process according to any one of the preceding claims, **characterized in that** the setting and the curing of the mixture are carried out at its final storage site.

8. Process according to the preceding claim, **characterized in that** the final storage site is a disused quarry.

9. Process according to any one of the preceding claims, **characterized in that** a reducing additive is incorporated in the mixing water.

10. Process according to the preceding claim, **characterized in that** the reducing additive is sodium sulphite.

11. Process according to any one of the preceding claims, **characterized in that** the sludge is composed of sediments originating from the cleaning out of waterways.
